# EUROPÄISCHE PATENTANMELDUNG

(11) **EP 4 420 570 A1**
(43) Veröffentlichungstag der Anmeldung: **28.08.2024**
(21) Anmeldenummer: 24152637.5
(22) Anmeldetag: 18.01.2024
(51) Int. Cl.: A47J 31/057, A47J 31/06

(54) **KAFFEEMASCHINE**

(30) Priorität: 24.02.2023 DE 102023104599
(71) Anmelder: Melitta Europa GmbH & Co. KG, 32427 Minden (DE)
(72) Erfinder: KUTZBACH, Daniel, 32429 Minden (DE)
(74) Vertreter: Dantz, Jan Henning

(57) **Zusammenfassung**

Eine Kaffeemaschine (1) umfasst eine Einrichtung zur Zubereitung von heißem Wasser, einen nach oben offenen Filterhalter (10) zum Einfügen eines Filterpapiereinsatzes (20) mit Kaffeemehl und eine Zuleitung zum Einleiten von heißem Wasser in den Filterhalter (10) und Ausgeben von Kaffee an mindestens einer unteren Öffnung (17) des Filterhalters (10), wobei der Filterhalter (10) von einer Brühposition an der Kaffeemaschine (1) in eine von der Kaffeemaschine (1) hervorstehende Füllposition zum Einsatz eines Filterpapiereinsatzes bewegbar ist, wobei an einem oberen Abschnitt des Filterhalters (10) mindestens ein nach innen ragender Vorsprung (13) zum Niederhalten eines in den Filterhalter (10) eingesetzten Filterpapiereinsatzes (20) integral ausgebildet ist und der mindestens eine Vorsprung (13) an einem oberen ringförmigen Rand (12) des Filterhalters (10) angeordnet ist.

## Beschreibung

Die vorliegende Erfindung betrifft eine Kaffeemaschine mit einer Einrichtung zur Zubereitung von heißem Wasser, einem nach oben offenen Filterhalter zum Einfügen eines Filterpapiereinsatzes mit Kaffeemehl und einer Zuleitung zum Einleiten von heißem Wasser in den Filterhalter und Ausgeben von Kaffee an mindestens einer unteren Öffnung des Filterhalters, wobei der Filterhalter von einer Brühposition an der Kaffeemaschine in eine von der Kaffeemaschine hervorstehende Füllposition zum Einsatz eines Filterpapiereinsatzes bewegbar ist.

Die EP 3 225 142 B1 offenbart eine Kaffeemaschine, bei der unter einem Mahlwerk eine Brüheinheit angeordnet ist, die einen bewegbaren Filterhalter aufweist, in den in einer hervorstehenden Befüllposition ein Filterpapiereinsatz einfügbar ist, wobei der Filterhalter nach dem Befüllen unter das Mahlwerk der Kaffeemaschine bewegbar ist. Dann kann Kaffeemehl in den Filterpapiereinsatz eingefüllt werden, um dann zum Brühen von Kaffee heißes Wasser einzuleiten, der dann in einer Kanne gesammelt wird. Solche Kaffeemaschinen sind bei der Filtration durch den Filterpapiereinsatz effizient und vermeiden die Bildung von Kaffeesatz in der Kanne. Beim Einsetzen eines Filterpapiereinsatzes kann es allerdings passieren, dass dieser entgegen der Vorgaben des Herstellers der Kaffeemaschine im Bereich einer Bodennaht nicht gefaltet wird und dann an einem oberen Filterhalter der Kaffeemaschine hervorsteht. Beim Verschwenken des Filterhalters von der Befüllposition in die Position unter dem Mahlwerk kann dann ein Gehäuse des Mahlwerkes einen Rand des Filterpapiereinsatzes umklappen, so dass das Kaffeemehl nicht in den Filterpapiereinsatz eingefüllt wird. Die Folge ist, dass das Kaffeepulver aus der Mühle nicht in den Filterpapiereinsatz sondern in den Filterhalter gelangt und von dort durch das aufgegebene Wasser in die Kanne gespült wird.

DE 196 31 680 A1 offenbart einen Sicherheitsring für Papierkaffeefilter der als separates Bauteil in einen Filterpapiereinsatz eingelegt wird, damit dieser zum Befüllen und zum Brühen von Kaffee seine Position beibehält.

Es ist daher Aufgabe der vorliegenden Erfindung, eine Kaffeemaschine bereitzustellen, die eine zuverlässige Positionierung eines Filterpapiereinsatzes in einem Filterhalter gewährleistet.

Diese Aufgabe wird mit einer Kaffeemaschine mit den Merkmalen des Anspruches 1 gelöst.

Die erfindungsgemäße Kaffeemaschine umfasst einen Filterhalter, der von einer Brühposition an der Kaffeemaschine in eine von der Kaffeemaschine hervorstehende Befüllposition zum Einsetzen eines Filterpapiereinsatzes bewegbar ist, wobei an einem oberen Abschnitt des Filterhalters mindestens ein nach innen ragender Vorsprung zum Niederhalten eines in den Filterhalter eingesetzten Filterpapiereinsatzes integral ausgebildet ist. Dadurch kann über den Vorsprung eine verbesserte Positionierung des Filterpapiereinsatzes gewährleistet werden, wenn ein oberer Rand des Filterpapiereinsatzes an der Unterseite des mindestens einen nach innen ragenden Vorsprunges anliegt. Dies verhindert, dass beim Bewegen des Filterhalters von der hervorstehenden Befüllposition in die Brühposition an der Kaffeemaschine ein oberer Rand des Filterpapiereinsatzes umgefaltet wird.

Erfindungsgemäß ist der mindestens eine Vorsprung an einem oberen ringförmigen Rand des Filterhalters angeordnet. Dabei können über den Rand des Filterhalters einer oder mehrere Vorsprünge angeordnet sein, optional können umlaufend um den gesamten ringförmigen Rand Vorsprünge vorgesehen sein. Der mindestens eine Vorsprung steht dabei von dem ringförmigen Rand radial nach innen hervor, bevorzugt um 1 mm bis 25 mm, insbesondere zwischen 4 mm bis 18 mm. Dadurch wird die Handhabung beim Einsetzen des Filterpapiereinsatzes in den Filterhalter vereinfacht.

Der mindestens eine Vorsprung ist bevorzugt plattenförmig ausgebildet. Dabei kann die Oberfläche des Vorsprunges optional glatt ausgebildet sein, oder es sind zumindest an der Unterseite Profilierungen in Form von Rippen oder Noppen vorgesehen, um einen oberen Rand des Filterpapiereinsatzes sicher an dem Vorsprung zu halten.

Zur Vermeidung von scharfkantigen Ecken oder Kanten ist der mindestens eine Vorsprung von oben gesehen im Wesentlichen in Form eines Halbkreises oder halben Ovals ausgebildet.

Der Filterpapiereinsatz ist im trockenen Zustand vorzugsweise klemmend zwischen einem Boden des Filterhalters und dem mindestens einen Vorsprung gehalten. Der Boden des Filterhalters kann streifen- oder linienförmig ausgebildet sein und eine Unterseite des Filterpapiereinsatzes kann durch eine Prägenaht oder Faltung hergestellt sein, die auf dem Boden aufliegt. Beim Einsetzen kann die Prägenaht umgebogen werden, so dass eine gewisse Klemmung des Filterpapiereinsatzes zwischen dem Boden und dem mindestens einen Vorsprung erzeugt wird.

In einer weiteren Ausgestaltung ist ein Innenraum des Filterhalters im Wesentlichen konisch oder sich keilförmig nach unten verjüngend zulaufend ausgebildet, wobei an einer Wand des Filterhalters nach innen hervorstehende Rippen zur Beabstandung des Filterpapiereinsatzes vorgesehen sind. Dadurch wird eine optimale Positionierung des Filterpapiereinsatzes erreicht, der während des Brühvorganges nicht flächig an der inneren Wand des Filterpapiereinsatzes anliegt, sondern an den Rippen, zwischen denen Kanäle zum Abströmen des gebrühten Kaffees ausgebildet sind.

Um das Einsetzen des Filterpapiereinsatzes zu erleichtern, ist vorzugsweise nur ein einziger nach innen ragender Vorsprung an dem Filterhalter vorgesehen. Dabei kann dieser eine Vorsprung an dem Filterhalter in der Befüllposition des Filterhalters auf der zur Kaffeemaschine gewandten Seite angeordnet sein. Beim Bewegen des Filterpapiereinsatzes von der hervorstehenden Befüllposition in die Brühposition ist der Vorsprung somit an einer vorderen Seite angeordnet und verhindert zuverlässig ein Umklappen des Filterpapiereinsatzes. Auf der gegenüberliegenden Seite würde ein Hervorstehen des Filterpapiereinsatzes keim Umklappen und Verschließen des Innenraumes des Filterpapiereinsatzes mehr bewirken.

Bei der Kaffeemaschine ist der Filterhalter vorzugsweise in einem Halter der Kaffeemaschine eingesetzt, insbesondere lose eingesetzt und nach oben entnehmbar, wobei über mindestens eine Profilierung, einen Vorsprung und/oder eine Aussparung an einem Rand des Filterhalters und des Halters die Ausrichtung des Filterhalters an dem Halter vorgegeben ist. Durch die vorgegebene Ausrichtung des Filterhalters an dem Halter ist es ausreichend, wenn nur ein einziger Vorsprung an dem ringförmigen Rand zum Niederhalten eines darin eingesetzten Filterpapiereinsatzes vorgesehen ist.

Erfindungsgemäß wird auch ein Filterhalter für eine Kaffeemaschine bereitgestellt, bei dem an einem oberen Abschnitt mindestens ein nach innen ragender Vorsprung zum niederhalten eines in den Filterhalter eingesetzten Filterpapiereinsatzes ausgebildet ist. Der mindestens eine Vorsprung ist bevorzugt integral mit dem Filterhalter ausgebildet, der beispielsweise aus Kunststoff hergestellt sein kann.

Die Erfindung wird nachfolgend anhand eines Ausführungsbeispiels mit Bezug auf die beigefügten Zeichnungen näher erläutert. Es zeigen:
- Figur 1: eine Ansicht einer erfindungsgemäßen Kaffeemaschine;
- Figur 2: eine perspektivische Ansicht eines Halters mit einem Filterhalter der Kaffeemaschine der Figur 1 ;
- Figur 3: eine Ansicht des Filterhalters der Figur 2;
- Figur 4: eine Ansicht eines Filterpapiereinsatzes;
- Figur 5: eine Schnittansicht des Filterhalters der Figur 3, und
- Figur 6: eine Schnittansicht des Filterhalters der Figur 3 mit Filterpapiereinsatz.

Eine Kaffeemaschine 1 umfasst an einer Oberseite einen Bohnenbehälter 2, der über einem Mahlwerk 3 zum Mahlen von Kaffeebohnen angeordnet ist. Unter dem Mahlwerk 3 ist ein Halter 4 vorgesehen, der verschwenkbar an der Kaffeemaschine 1 gehalten ist. In einer Brühposition befindet sich der Halter 4 unter dem Mahlwerk 3 und kann durch Verschwenken, beispielsweise um einen Winkel zwischen 60 und 180°, in eine hervorstehende Position verschwenkt werden, um einen Filterpapierreinsatz einzusetzen. Unter dem Halter 4 befindet sich in der Brühposition eine Kanne 5 zum Auffangen des gebrühten Kaffees.

Die Kanne 5 ist auf einem Sockel 6 eines Gehäuses abgestellt, und neben dem Sockel 6 ist eine Bedieneinheit 7 mit Schaltern oder Tasten und optional einer Anzeige vorgesehen. Ferner umfasst die Kaffeemaschine 1 einen Wassertank 8 zum Einfüllen von kaltem Wasser, damit dieses über eine Heizeinrichtung in dem Gehäuse erhitzt und dann über einen Zulauf in den Halter 4 von oben eingeleitet werden kann.

Die dargestellte Kaffeemaschine 1 umfasst ein Mahlwerk 3 über dem Halter 4, es ist aber auch möglich, den Halter 4 manuell mit gemahlenem Kaffeemehl zu befüllen, so dass auf den Bohnenbehälter 2 und das Mahlwerk 3 verzichtet werden kann.

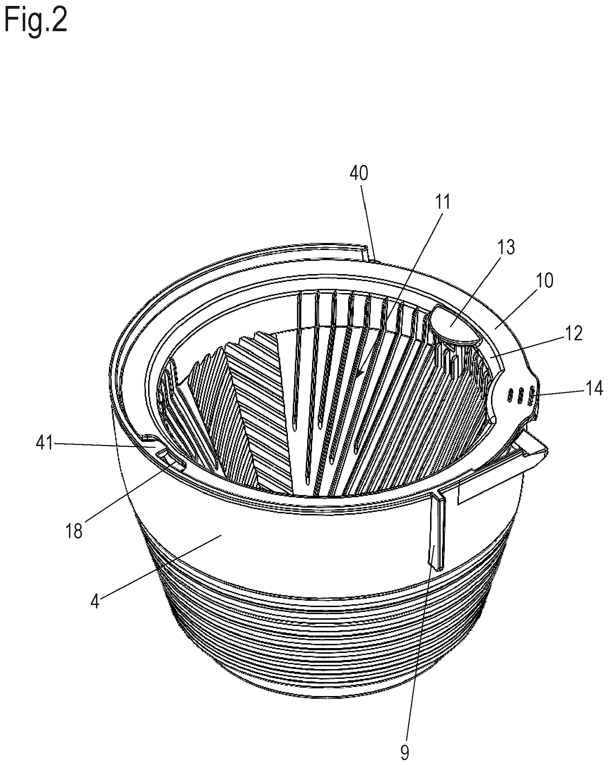

In Figur 2 ist der Halter 4 gezeigt, in den ein Filterhalter 10 lose eingesetzt ist. Der Halter 4 umgibt den Filterhalter 10 ringförmig und weist einen äußeren Griffabschnitt 9 auf, der in einem gegenüberliegenden Bereich zu einer Schwenkachse 40 angeordnet ist, mittels der der Halter 4 drehbar an dem Gehäuse der Kaffeemaschine 1 gelagert ist.

Der Filterhalter 10 umfasst einen nach oben offenen Innenraum 11, der sich nach unten im Wesentlichen konisch oder keilförmig verjüngt. An einem oberen ringförmigen Rand 12 des Filterhalters 10 ist an einer Seite ein nach innen ragender Vorsprung 13 ausgebildet, der in radiale Richtung beispielsweise zwischen 4 mm bis 25 mm hervorsteht. An dem ringförmigen Rand 12 ist ferner ein Griffabschnitt 14 ausgebildet, an dem der Filterhalter 10 gegriffen und nach oben aus dem Halter 4 entfernt werden kann in der hervorstehenden Füllposition des Halters 4. Um die korrekte Ausrichtung des Filterhalters 10 an dem Halter 4 zu gewährleisten, ist an dem oberen Rand 12 des Filterhalters eine Aussparung 18 ausgebildet, in die ein nach innen ragender Vorsprung 41 des Halters 4 eingefügt ist. Es ist auch möglich, zur korrekten Positionierung des Filterhalters 10 andere Profilierungen vorzusehen, oder an dem Rand 12 einen Vorsprung und an dem Halter 4 eine Aussparung.

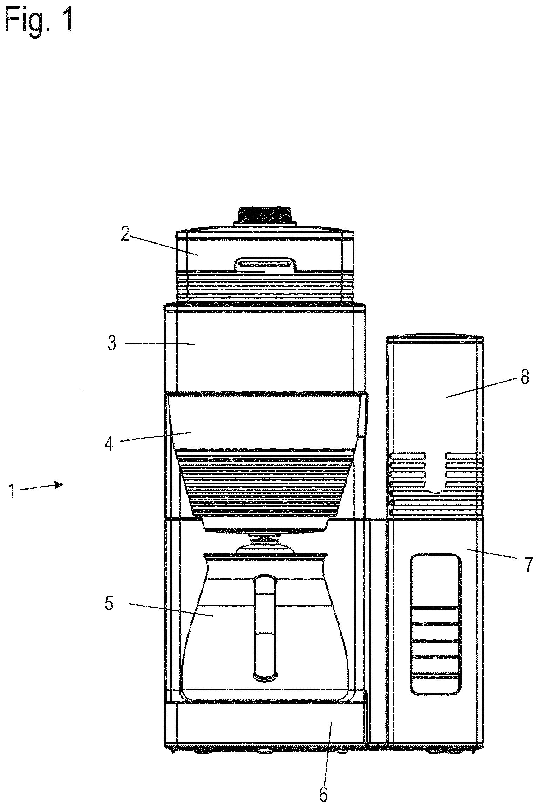

Wenn der Halter 4 in einer von der Kaffeemaschine 1 hervorstehenden Befüllposition angeordnet ist, befindet sich der nach innen ragende Vorsprung 13 auf der zu der Kaffeemaschine 1 gewandten Seite, also benachbart zu dem Mahlwerk 3 bei der Kaffeemaschine der Figur 1. Dadurch ist beim Zurückschwenken des Halters 4 aus der hervorstehenden Position gewährleistet, dass sich der Vorsprung 13 an einer Vorderseite befindet und ein Umklappen eines in den Filterhalter 10 eingefügten Filterpapiereinsatzes vermeidet.

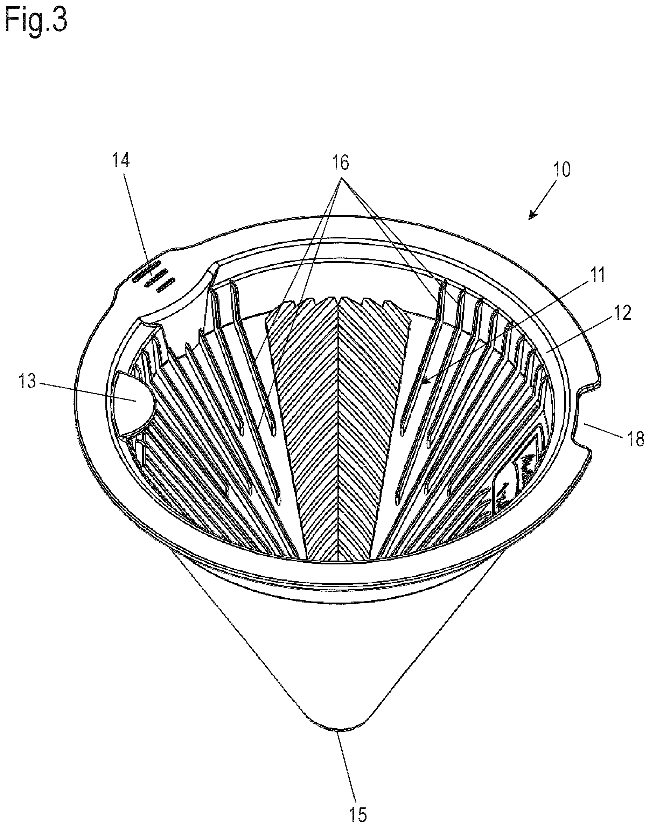

In Figur 3 ist der Filterhalter 10 ohne den umgebenden Halter 4 gezeigt, und es ist erkennbar, dass der Filterhalter 10 nach unten zu einem Boden 15 verjüngend ausgebildet ist, wobei an dem Boden 15 eine oder mehrere Öffnungen ausgebildet sind, um den gebrühten Kaffee in einem Gefäß aufzufangen, insbesondere der Kanne 5. An dem Innenraum 11 des Filterhalters 10 sind eine Vielzahl von Rippen 16 vorgesehen, die sich von unten nach oben erstrecken und zwischen denen Kanäle zum Abströmen von gebrühtem Kaffee ausgebildet sind. Die Rippen 16 sorgen für eine Beabstandung eines in den Filterhalter 10 eingefügten Filterpapiereinsatzes.

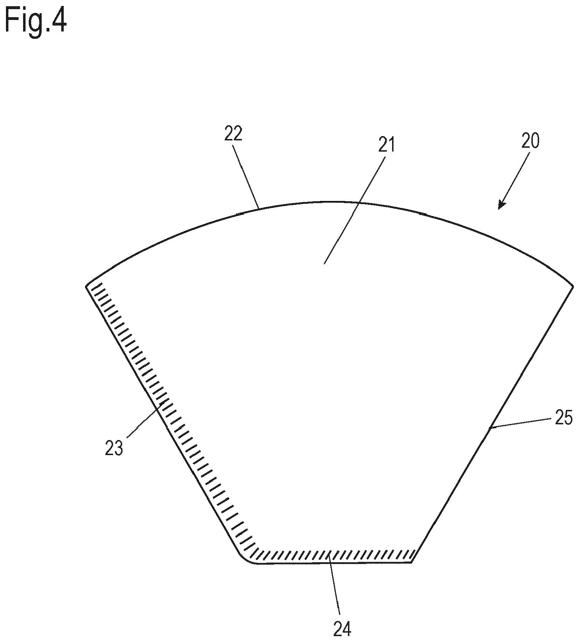

In Figur 4 ist ein Filterpapiereinsatz 20 gezeigt, der zwei Lagen aus Filterpapier 21 aufweist, die einander überdecken und beim Einsetzen in den Filterhalter 10 an einer oberen Öffnung 22 voneinander beabstandet werden. Die beiden Lagen des Filterpapiereinsatzes 20 sind an einer Seite über eine Prägenaht 23 und am Boden über eine Prägenaht 24 miteinander verbunden und an einer Seite über eine Faltkante 25. Es ist auch möglich, die Faltkante am Boden vorzusehen oder auf eine Faltkante zu verzichten und nur Prägenähte vorzusehen.

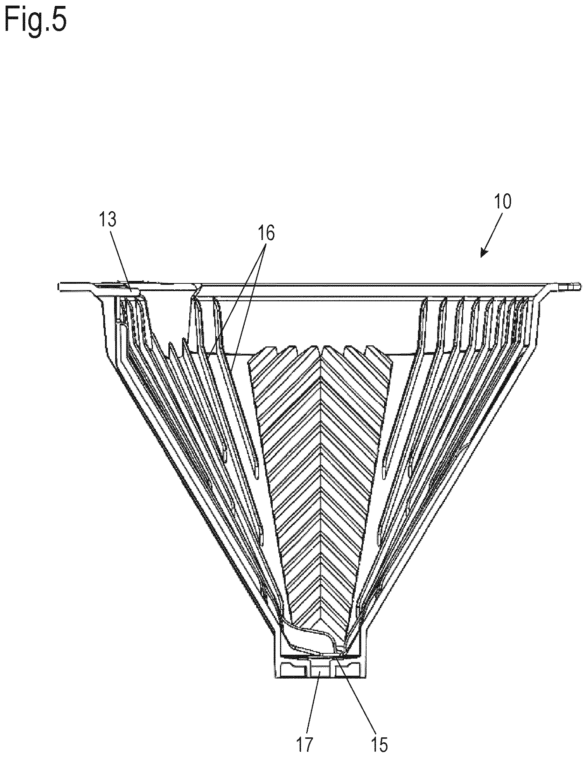

In Figur 5 ist der Filterhalter 10 im Schnitt gezeigt, und es ist erkennbar, dass an dem Boden 15 des Filterhalters 10 eine Öffnung 17 zum Ableiten des Gebrühten Kaffees ausgebildet ist.

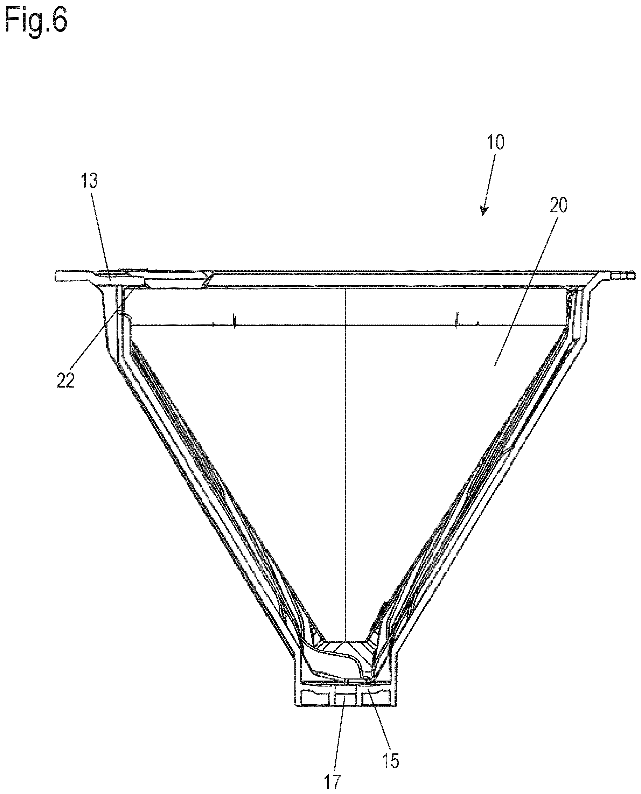

In den Filterhalter 10 wird nun ein Filterpapiereinsatz 20 eingesetzt, wobei die Prägenaht 24 am Boden auf den Boden 15 abgesetzt wird. Wenn die Prägenaht 24 nicht gefaltet ist, kann diese auf dem Boden 15 aufstehen. In Figur 6 ist der Filterpapiereinsatz 20 im Schnitt gezeigt, und ein oberer Rand an der Öffnung 22 des Filterpapiereinsatzes 20 ist an einer Unterseite des nach innen ragenden Vorsprunges 13 vorgesehen. Der Vorsprung 13 verhindert, dass der Filterpapiereinsatz in diesem Bereich weiter nach oben ragt, und der Filterpapiereinsatz 20 ist vorzugsweise klemmend zwischen dem oberen Rand, der an dem Vorsprung 13 anliegt, und dem Boden 15 des Filterhalters 10 fixiert, wenn der Filterpapiereinsatz 20 trocken und nicht befüllt ist.

Der Filterhalter 10 kann mit dem eingesetzten Filterpapiereinsatz 20 nun von der hervorstehenden Position in die Brühposition verschwenkt werden, wobei der Vorsprung 1e dafür sorgt, dass ein unterer Rand des Mahlwerks 3 oder eines Gehäuses der Kaffeemaschine 1 die Lage des Filterpapiereinsatzes 20 umklappt und wieder verschließt.

In dem dargestellten Ausführungsbeispiel ist nur ein einziger nach innen ragender Vorsprung 13 an dem ringförmigen Rand 12 des Filterhalters 10 integral ausgebildet. Es ist natürlich auch möglich, mehrere Vorsprünge 13 vorzusehen, die die gleiche oder eine unterschiedliche Kontur aufweisen und für eine sichere Fixierung des Filterpapiereinsatzes 20 in dem Filterhalter 10 sorgen.

### Bezugszeichenliste

- 1: Kaffeemaschine
- 2: Bohnenbehälter
- 3: Mahlwerk
- 4: Halter
- 5: Kanne
- 6: Sockel
- 7: Bedieneinheit
- 8: Wassertank
- 9: Griffabschnitt
- 10: Filterhalter
- 11: Innenraum
- 12: Rand
- 13: Vorsprung
- 14: Griffabschnitt
- 15: Boden
- 16: Rippe
- 17: Öffnung
- 18: Aussparung
- 20: Filterpapiereinsatz
- 21: Filterpapier
- 22: Öffnung
- 23: Prägenaht
- 24: Prägenaht
- 25: Faltkante
- 40: Schwenkachse
- 41: Vorsprung

## Patentansprüche

1. Kaffeemaschine (1) mit einer Einrichtung zur Zubereitung von heißem Wasser, einem nach oben offenen Filterhalter (10) zum Einfügen eines Filterpapiereinsatzes (20) mit Kaffeemehl und einer Zuleitung zum Einleiten von heißem Wasser in den Filterhalter (10) und Ausgeben von Kaffee an mindestens einer unteren Öffnung (17) des Filterhalters (10), wobei der Filterhalter (10) von einer Brühposition an der Kaffeemaschine (1) in eine von der Kaffeemaschine (1) hervorstehende Füllposition zum Einsatz eines Filterpapiereinsatzes bewegbar ist, **dadurch gekennzeichnet, dass** an einem oberen Abschnitt des Filterhalters (10) mindestens ein nach innen ragender Vorsprung (13) zum Niederhalten eines in den Filterhalter (10) eingesetzten Filterpapiereinsatzes (20) integral ausgebildet ist und der mindestens eine Vorsprung (13) an einem oberen ringförmigen Rand (12) des Filterhalters (10) angeordnet ist.

2. Kaffeemaschine nach Anspruch 1, **dadurch gekennzeichnet, dass** der mindestens eine Vorsprung (13) von dem ringförmigen Rand (12) radial nach innen zwischen 1 mm bis 25 mm, insbesondere 4 mm bis 18 mm, hervorsteht.

3. Kaffeemaschine nach Anspruch 1 oder 2, **dadurch gekennzeichnet, dass** der mindestens eine Vorsprung (13) plattenförmig ausgebildet ist.

4. Kaffeemaschine nach einem der vorhergehenden Ansprüche, **dadurch gekennzeichnet, dass** der mindestens eine Vorsprung (13) von oben gesehen im Wesentlichen die Form eines Halbkreises oder halben Ovals besitzt.

5. Kaffeemaschine nach einem der vorhergehenden Ansprüche, **dadurch gekennzeichnet, dass** der Filterpapiereinsatz (20) im trockenen Zustand klemmend zwischen einem Boden (15) des Filterhalters (10) und dem mindestens einen Vorsprung (13) gehalten ist.

6. Kaffeemaschine nach einem der vorhergehenden Ansprüche, **dadurch gekennzeichnet, dass** ein Innenraum (11) des Filterhalters (10) im Wesentlichen sich konisch oder keilförmig nach unten verjüngend zuläuft und an einer Wand des Filterhalters (10) nach innen hervorstehende Rippen (16) zur Beabstandung des Filterpapiereinsatzes (20) vorgesehen sind.

7. Kaffeemaschine nach einem der vorhergehenden Ansprüche, **dadurch gekennzeichnet, dass** nur ein einziger nach innen ragender Vorsprung (13) an dem Filterhalter (10) vorgesehen ist.

8. Kaffeemaschine nach einem der vorhergehenden Ansprüche, **dadurch gekennzeichnet, dass** der mindestens eine Vorsprung (13) an dem Filterhalter (10) in der Befüllposition an der zu der Kaffeemaschine (1) gewandten Seite angeordnet ist.

9. Kaffeemaschine nach einem der vorhergehenden Ansprüche, **dadurch gekennzeichnet, dass** der Filterhalter (10) in einem Halter (4) der Kaffeemaschine eingesetzt ist und über mindestens eine Profilierung, einen Vorsprung (41) und/oder eine Aussparung (18) an einem Rand (12) des Filterhalters (10) und des Halters (4) die Ausrichtung des Filterhalters (10) an dem Halter (4) vorgegeben ist.

10. Filterhalter (10) für eine Kaffeemaschine (1) nach einem der vorhergehenden Ansprüche.
